(19) Europäisches Patentamt
European Patent Office
Office européen des brevets

(11) Publication number: 0 209 978
A2

# (12) EUROPEAN PATENT APPLICATION

(21) Application number: 86304383.2

(22) Date of filing: 09.06.86

(51) Int. Cl.⁴: C 23 F 11/00
C 04 B 24/12

(30) Priority: 10.06.85 US 742963

(43) Date of publication of application: 28.01.87 Bulletin 87/5

(84) Designated Contracting States: AT BE CH DE FR GB IT LI LU NL SE

(71) Applicant: Sealed Air Corporation
Park 80 Plaza East
Saddle Brook New Jersey 07662(US)

(72) Inventor: Martin, Philip J.
153 East Little Canada Road
Little Canada, MN. 55117(US)

(72) Inventor: Miksic, Boris A.
21 Black Oak Road North Oaks
St. Paul, MN. 55110(US)

(74) Representative: Parr, Ronald Edward R.E. Parr & Co.
Colman House Station Road
Knowle Solihull West Midlands B93 0HL(GB)

## (54) Corrosion inhibition in reinforced concrete.

(57) One or more hydroxyalkylamines having molecular weights ranging from about 48 to about 500 and vapor pressure at 20°C ranging from about $10^{-4}$ to about $10^{1}$ mm. of mercury are employed as the major ingredient of a corrosion inhibiting composition that itself is mixed into a hydraulic cement slurry. The hydroxyalkylamines provide corrosion protection to iron or steel reinforcing members embedded within the concrete but do not substantially affect the air entraining capacity of the slurry.

EP 0 209 978 A2

# CORROSION INHIBITION IN REINFORCED CONCRETE

## BACKGROUND OF THE INVENTION

### Field of the Invention.

The invention relates to the inhibition of the corrosion of iron or steel members imbedded in concrete structures.

Cementitious compositions such as Portland cement, sulfate-resisting cements and the like that are capable of being set and hardened by the action of water, commonly are referred to as "hydraulic cements". The hard, strong concrete structures formed through setting and curing of a slurry of hydraulic cement, water and an aggregate such as sand and gravel commonly are reinforced through the use of metal bars often referred to as "re-bars".

The presence of chloride ions from accelerators such as calcium chloride, from sea sand aggregate, or from metal chlorides used to melt ice on a roadway, can cause reinforcing bars to corrode severely. This corrosion problem in the past has been dealt with through the use of cathodic protection and also through the use of various chemicals that tend to inhibit corrosion of the metal reinforcing bars.

The use of corrosion-inhibiting additives has not been marked with significant commercial success, however. Certain additives tend to reduce the important capacity of a concrete slurry to entrain and to maintain the entrainment of air as the slurry is prepared, poured and set. Inhibitors also can have the capacity of acting as accelerators to hasten the cure rate of a cementitious slurry in a manner that is not desired or that is not readily controlled.

Description of the Prior Art.

Several patent references disclose the use of certain alkali metal nitrites as cement additives to reduce corrosion of embedded iron or steel members. U.S. Patent 3,210,207 describes the use of sodium nitrite and various other compounds in combination with major amounts of calcium formate. U.S. Patent 3,801,338 discloses the incorporation in concrete of corrosion-inhibiting compositions containing major amounts of sodium nitrite and smaller amounts of calcium formate; small amounts of triethanolamine can optionally be added to the composition. In U.S. Patent 3,976,494, sodium nitrite is employed in combination with phosphoric esters and boric esters, and U.S. Patent 4,365,999 employs a composition containing a nitrite such as sodium nitrite, a compound such as glycine, and a hydrazine hydrate. Calcium nitrite is employed according to the teaching of U.S. Patent 4,092,109, and a polyvinyl alcohol resin composition is employed in the teaching of U.S. Patent 4,119,597.

SUMMARY OF THE INVENTION

It has now been found that one or more corrosion-inhibiting hydroxyalkylamine compounds having molecular weights ranging from about 48 to about 500 and having vapor pressures at 20°C ranging from about $10^{-4}$ to $10^{1}$ mm. Hg. can be employed as the major ingredient of a corrosion inhibiting composition that itself can be mixed into a hydraulic cement slurry, and that the resulting slurry surprisingly maintains its ability to entrain air; that is, the hydroxyalkylamine corrosion-inhibiting compounds do not have a substantial effect upon the air-entraining properties of a cementitious slurry. The ratio (referred to elsewhere herein as the "air entrainment

variance") of the volume of entrained air "$V_1$" per unit volume of slurry, as above described, to the volume of entrained air "$V_o$" per unit volume of an identical slurry but absent the corrosion-inhibing compound, desirably is in the range of 3/2 to 2/3. Preferably, $V_1$ is within 20% of $V_o$. These hydroxyalkylamines also appear to have the capacity to percolate or permeate through cured concrete structures so as to come into contact with iron or steel reinforcing members and provide these members with corrosion protection. Moreover, the hydroxyalkylamines of the invention have no substantial effect upon set times of concrete slurries. That is, the slurry set times are neither increased nor decreased through the addition of the hydroxyalkylamine corrosion inhibitor by more than about 25%.

In one embodiment, the invention relates to a method of inhibiting corrosion of iron or steel imbedded in concrete, and comprises adding to the concrete an effective quantity of corrosion inhibiting composition having as its major ingredient a water-soluble and preferably water-miscible hydroxyalkylamine (including mixtures thereof) having a molecular weight in the range of about 48 to about 500 and a vapor pressure at 20°C in the range of $10^{-4}$ to $10^{1}$ mm. Hg. Although various other corrosion resistant materials can be employed in admixture with the hydroxyalkylamine, the hydroxyalkylamine component is the major ingredient; that is, it provides the majority by weight of the corrosion-inhibiting composition. The hydroxyalkylamines are water soluble and preferably are miscible with water in all proportions. Preferably, the air entrainment variance $V_1/V_o$, as above defined, ranges from about 3/2 to about 2/3, and most preferably $V_1$ does not vary from $V_o$ by more than 20%.

The hydroxyalkylamines referred to above preferably are compounds of the formula:

$$\begin{array}{c} R_2 \\ | \\ R_1\text{-}N\text{-}R_3OH \end{array} \quad \text{or} \quad \begin{array}{c} R_3OH \\ | \\ R_1\text{-}N \\ | \\ R_4OH \end{array} \quad \text{or} \quad \begin{array}{c} R_3OH \\ | \\ HOR_5\text{-}N \\ | \\ R_4OH \end{array}$$

in which $R_1$ and $R_2$ are, independently, hydrogen, lower $(C_1-C_6)$ alkyl, $C_4-C_6$ cycloalkyl, lower $(C_2-C_6)$ alkenyl, aryl, or alkaryl, wherein $R_3$, $R_4$, and $R_5$ are, independently, lower $(C_1-C_6)$ alkylene, $C_4-C_6$ cycloalkylene, lower $(C_2-C_6)$ alkenylene, phenylene, alkphenylene, or $-R_6-X-R_7-$ wherein $R_6$ and $R_7$ are, independently, lower $(C_1-C_6)$ alkylene, $C_4-C_6$ cycloalkylene, lower $(C_2-C_6)$ alkenylene and X is -O- or -S- or $-NH-R_8$ wherein $R_8$ is lower $(C_1-C_6)$ alkylene, $C_4-C_6$ cycloalkylene, or lower $(C_2-C_6)$ alkenylene.

More desirably, the hydroxyalkylamines are compounds of the formula:

$$\begin{array}{c} R_9\text{-}N_1\text{-}R_{10} \\ | \\ R_{11} \end{array}$$

wherein $R_9$, $R_{10}$, and $R_{11}$, may independently be, hydrogen, lower $(C_1-C_6)$ alkyl or $-R_{12}$ - OH in which $R_{12}$ is lower alkylene, $C_4-C_6$ cycloalkylene, phenylene, or alkphenylene, and at least one of $R_9$, $R_{10}$, and $R_{11}$ is $-R_{12}$ - OH. Preferably, $R_9$, $R_{10}$, and $R_{11}$ are, independently, hydrogen, $C_1-C_3$ alkyl or $C_1-C_4$ hydroxyalkyl with at least one of $R_9$, $R_{10}$, and $R_{12}$ being $C_1-C_4$ hydroxyalkyl. Typifying such compounds are diethanolamine, dimethylpropanolamine, methyldiethanolamine, monoethanolamine and dimethylethanolamine.

In another embodiment, the invention relates to a pourable cementitious slurry suitable for making concrete structures in which iron or steel reinforcing members may be embedded. The slurry comprises a hydraulic cement, water, aggregates such as sand and, optionally, gravel, and a corrosion-inhibiting composition having as its major ingredient one or a mixture of hydroxyalkylamines as above-identified in a concentration by weight of from about 0.002% to about 3%, and preferably about 0.01% to about 0.1%, the slurry being further characterized by including entrained air in an amount such that $V_1/V_o$, as above defined, ranges from about 3/2 to about 2/3, $V_1$ preferably varying from $V_o$ by no more than about 20%.

In another embodiment, the invention relates to a method for repairing existing concrete structures having embedded iron or steel reinforcing members in which a cementitious slurry is poured on top of the cured concrete structure. This occurs, for example, when a bridge deck is repaired and the uppermost concrete layer is mechanically removed to provide a bed upon which a new concrete layer is poured. The method is characterized by the step of incorporating in a cementitious slurry from about 0.002% to about 3% by weight (and preferably from about 0.01% to about 0.1% by weight) of the corrosion-inhibiting composition referred to above, and permitting the hydroxyalkylamine constituent to migrate from the slurry, when poured, through the cured concrete structure and into corrosion-inhibiting contact with the iron or steel reinforcing members. Again, $V_1/V_o$ preferably is

in the range of about 3/2 to about 2/3, and $V_1$ most preferably varies from $V_o$ by no more than about 20%

## DETAILED DESCRIPTION

The hydroxyalkylamine corrosion-inhibiting compounds useful in the invention are those which are water soluble (that is, soluble in water to the extent of at least about 0.5 grams of the hydroxyalkylamine per liter of water at 20°C). The hydroxyalkylamine compounds of the invention are preferably water miscible in all proportions. The compounds can be primary, secondary or tertiary amines having molecular weights in the range of about 48 to about 500 and preferably from about 48 to about 250. The compounds desirably are of the formula:

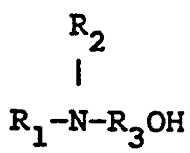 or 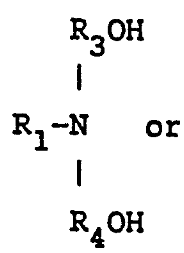 or 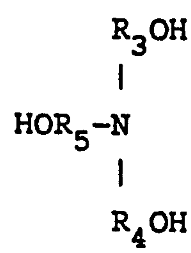

wherein $R_1$ through $R_5$ are as described above. Preferably, the compounds are of the formula:

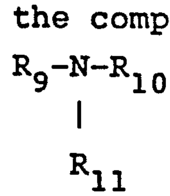

wherein groups $R_9$, $R_{10}$ and $R_{11}$ are as described above. The hydroxyalkylamines of the invention, in addition, exhibit vapor pressures in the range of from about $10^{-4}$ to about $10^1$ mm. mercury at 20°C.

The corrosion-inhibiting compositions of the invention include one or more hydroxyalkylamines as the major constituent and preferably as the sole constituent. The compositions may include other, minor

corrosion-inhibiting ingredients. If desired, a mixture of hydroxyalkylamines may be employed, it being required only that the hydroxyalkylamine constituent or constituents together comprise the major (greater than 50% by weight) ingredient of the corrosion-inhibiting composition.

As mentioned earlier, dimethylethanolamine is a preferred hydroxyalkylamine. Other typical hydroxyalkylamine compounds include methyldiethanolamine, triethanolamine, diethylmethanolamine, N,N-dimethyl-N', N'-di-(2-hydroxypropyl)-1,3-propane diamine, dimethylaminoethoxyethanol, N,N,N'-trimethyl-N'-(hydroxyethyl)-1,3-propane diamine, diethanolamine and dimethylpropanolamine.

The compounds also are particularly characterized by not substantially affecting the air-entraining capacity of cementitious slurries. Freshly poured concrete, often referred to as "normal weight," commonly contains about 6% by volume of air, although this value can range between extremes of from about 3% to about 8%. Normal weight concrete is often used as structural concrete for retaining walls and the like. So called "heavyweight" or "low slump" concrete slurries usually contain entrained air ranging from about 3.5% to about 7.5% by volume and commonly about 5.5% by volume. Heavy weight concrete commonly is used in situations requiring high wear resistance such as for bridge overlays. Control of the volume of entrained air in both normal weight and heavy weight concrete is important.

The hydroxyalkylamine corrosion inhibitors of the invention, when incorporated in a cementitious slurry, do not increase the volume of entrained air by more than about 1/2 nor decrease such volume by more

than about 1/3. Put another way, if $V_1$ is the volume of air entrained in a unit volume of slurry incorporating a corrosion inhibitor of the invention, and $V_0$ is the volume of air entrained in an identical slurry but absent the corrosion inhibitor, then the ratio $V_1/V_0$ falls within the range of about 3/2 to 2/3. Most preferably, $V_1$ does not vary from $V_0$ by more than about 20%.

The air content may be measured by several methods, but the method of ASTM C-231-82 is preferred. Various air entrainment agents are known to the art, and can be employed in concrete mixtures to facilitate air entrainment.

EXAMPLE I

To determine the effect which different corrosion inhibiting compounds have upon the ability of a hydraulic cement slurry to retain entrained air, a variety of normal weight cement slurries were prepared in accordance with ASTM C-192. Each batch included 684 pounds (310 kg.) of Portland cement, 1,166 pounds (529 kg.) of oven-dried fine aggregate (sand), 1,768 pounds (802 kg.) of oven-dried coarse aggregate (3/4 inches (1.9 cm.) and water in accordance with the ASTM procedure. The results are reported in Table I, and indicate that the hydroxyalkylamine inhibitor (dimethylethanolamine) had little effect on the entrained air content of the cementitious material regardless of the air entrainment agent employed. However, the corrosion inhibitors ("F") and ("G"), which were not mainly hydroxyalkylamine, greatly reduced the ability of the cement to entrain and retain entrained air, regardless of the type and amount of air entrainment agent.

TABLE I

| Batch: | | 1 (Control) | 2 | 3 | 4 | 5 |
|---|---|---|---|---|---|---|
| Air Entrainment Agent; | | $A^{(1)}$ | $A^{(1)}$ | $B^{(2)}$ | $C^{(3)}$ | $A^{(1)}$ |
| | oz. | 41 | 41 | 41 | 41 | 41 |
| | Kg. | 1.16 | 1.16 | 1.16 | 1.16 | 1.16 |
| Water, lbs. | | 248 | 253 | 262 | 239 | 277 |
| | Kg. | 112.5 | 114.8 | 118.8 | 108.4 | 125.6 |
| Slump, in. | | 3 | 3-1/4 | 3-1/2 | 3-1/2 | 2-1/2 |
| | cm | 7.62 | 8.26 | 8.89 | 8.89 | 6.35 |
| (ASTM C-143-78) | | | | | | |
| Air Content %, (ASTM C-231-82) | | 8.4 | 7.9 | 6.9 | 9.4 | 3.3 |
| Unit Weight, lbs/ft.$^3$ | | 139.96 | 140.76 | 143.84 | 139.07 | 148.31 |
| g/cm$^3$ | | 2.242 | 2.255 | 2.304 | 2.228 | 2.376 |
| Corrosion Inhibitor | | None | $D^{(4)}$ 1.0 lb. | $D^{(4)}$ 1.0 lb. | $E^{(4)}$ 1.0 lb. | $F^{(5)}$ 1.0 lb. |
| | Kg. | | 0.4536 | 0.4536 | 0.4536 | 0.4536 |
| Air Entrainment Agent; | | $B^{(2)}$ | $C^{(3)}$ | $A^{(1)}$ | $A^{(1)}$ | $A^{(1)}$ |
| | oz. | 41 | 41 | 82 | 41 | 123.1 |
| | Kg. | 1.16 | 1.16 | 2.32 | 1.16 | 3.49 |

| Batch: | 6 | 7 | 8 | 9 | 10 |
|---|---|---|---|---|---|
| Water, lbs. | 275 | 275 | 257 | 280 | 280 |
| Kg. | 124.7 | 124.7 | 116.6 | 127.0 | 127.0 |
| Slump, in. | 3" | 3" | 5" | 3" | 2-1/2 |
| cm. | 7.62 | 7.62 | 12.7 | 7.62 | 6.35 |
| Air Content,% | 2.5 | 2.5 | 4.1 | 2.5 | 2.8 |
| Unit Weight, lbs/ft.$^3$ | 149.06 | 148.91 | 147.12 | ---- | ---- |
| g/cm$^3$ | 2.39 | 2.39 | 2.36 | ---- | ---- |
| Corrosion | F[5] | F[5] | F[5] | G[6] | G[6] |
| Inhibitor lb. | 1.0 | 1.0 | 1.0 | 2.0 | 2.0 |
| Kg. | 0.4356 | 0.4356 | 0.4356 | 0.8712 | 0.8712 |

---

Notes:

(1) "Daravair M", a trademarked product of W. R. Grace & Co. (air entrainment agent)

(2) "Pro-Air", a trademarked product of Protex Industries, Inc. (air entrainment agent)

(3) "Amex 210", a trademarked Product of American Admixtures & Chemicals Corp. (air entrainment agent)

(4) Dimethylethanolamine

(5) Mixture of N,N-dimethyl, N-($C_{10}$-$C_{11}$) alkyl amines

(6) VCI-307, corrosion inhibitor, product of Sealed Air Corporation.

## EXAMPLE II

Slurries of Portland cement, sand and water were prepared in accordance with ASTM C-185-80. Various candidate corrosion inhibitors were added to specimens of the slurry at a concentration of 250 parts of corrosion inhibitor per million parts of slurry water. Duplicate measurements of air content were made in accordance with the ASTM procedure. Further, measurements of the ability of the candidate corrosion inhibitors to inhibit corrosion were made under ASTM G-5/82, with slight modifications. The results are reported in Table II. The value $V_1/V_o$ was derived by dividing the reported percentage air content by the percentage air content of the control.

TABLE II

| Candidate Corrosion Inhibitor | Air Content, %, Avg. | Annual Corrosion Rate; Mils | Microns | $V_1/V_o$ |
|---|---|---|---|---|
| A. Control | 7.93 | 37.7 | 957.6 | - |
| B. 85% Dimethylamino - ethoxyethanol, 15% bis (dimethylaminoethyl) ether | 9.23 | 1.8 | 45.7 | 1.16 |
| C. N,N,N'-trimethyl-N'-(hydroxyethyl) ethylene diamine | 9.35 | 1.8 | 45.7 | 1.18 |
| D. N,N,N'-trimethyl-N'-(hydroxyethyl)-1,3-propane diamine | 9.96 | 1.2 | 30.5 | 1.26 |
| E. N,N-dimethyl-N',N'-di (2-hydroxypropyl)-1,3-propane diamine | 9.91 | 0.7 | 17.8 | 1.25 |
| F. Methyldiethanolamine | 8.55 | 0.5 | 12.7 | 1.08 |
| G. Triethanolamine | 8.04 | 0.5 | 12.7 | 1.01 |
| H. Monoethanolamine | 7.71 | 0.5 | 12.7 | 0.97 |
| I. Dimethylethanolamine | 9.4 | 1.5 | 38.1 | 1.19 |
| J. Dicyclohexylamine | 4.3 | 1.4 | 35.6 | 0.54 |

## Example III

Batches of "normal slump" or "normal weight" concrete were prepared by mixing together the following ingredients on a laboratory mixer:

| Ingredient | Lbs/yd$^3$ | Kg/m$^3$ |
|---|---|---|
| Cement, Type I Portland | 658 | 390.4 |
| Fine aggregate | 1160 | 688.2 |
| Coarse aggregate | 1770 | 1050.1 |
| Water, net | 280 | 166.1 |
| Protex AES | 0.69 | 0.41 |

The moisture content of the aggregates was determined and the batch weights were adjusted for the free moisture in the aggregates. The Protex AES ingredient is an air-entrainment product manufactured by Protex Industries Incorporated and comprising an aliphatic hydrocarbon resin derived from pine wood.

To 1.5 cubic foot (0.042 cubic meter) aliquots of the resulting slurry were added candidate corrosion inhibitor compounds at a concentration of 1 pound per cubic yard (0.593 Kg/m$^3$). "Slump" was measured in accordance with ASTM:C143, and the air content of the concrete was measured by the pressure method according to ASTM:C231. In addition, two 6 inch x 12 inch (15.2 cm x 30.48 cm) standard cylinders were cast for each batch and were cured at 73 degrees F (22.8 degrees C) and 100% relative humidity prior to testing it seven days after casting and 28 days after casting. The candidate corrosion inhibitor compounds are identified by letter as follows, and the test results are reported in Table III.

| Inhibitor Sample | Identification |
|---|---|
| A | N, N, N'-trimethyl-N'-hydroxyethyl ethylene diamine |
| B | N, N-dimethyl-N',N'-dihydroxypropyl-1,3-propane diamine |
| C | Methyldiethanolamine |
| D | N,N,N'-trimethyl-N'-hydroxyethyl-1,3-propane diamine |
| E | Dimethylaminoethoxyethanol (85%), Bis-dimethylaminoethyl ether (15%) |
| F | Cyclohexylamine |
| G | Dicyclohexylamine |
| H | Monoethanolamine |
| I | Triethanolamine |
| J | Dimethylethanolamine |

**Table III**

| Inhibitor Sample | Slump, in. | Slump, cm. | Air Content % | Compressive Strength Kg/cm$^2$ 7 days | Compressive Strength Kg/cm$^2$ 28 days | Time of Set, Hours (ASTM C-403) Initial | Time of Set, Hours (ASTM C-403) Final | $V_1/V_o$ |
|---|---|---|---|---|---|---|---|---|
| Control | 3 | 7.6 | 5.9 | 361.4 | 428.9 | 5.15 | 7.9 | – |
| A | 3-1/4 | 8.3 | 7.9 | 303.0 | 365.6 | 5.35 | 7.42 | 1.34 |
| B | 2-3/4 | 7.0 | 6.7 | 329.0 | 416.2 | 5.3 | 7.25 | 1.14 |
| C | 3-1/2 | 8.9 | 7.4 | 374.0 | 535.0 | 4.45 | 5.95 | 1.25 |
| D | 3-1/4 | 8.3 | 8.4 | 385.3 | 486.5 | 4.85 | 6.4 | 1.42 |
| E | 3 | 7.6 | 7.6 | 383.9 | 485.8 | 5.1 | 6.53 | 1.29 |
| F | 3 | 7.6 | 8.1 | 407.1 | 496.4 | 5.55 | 6.85 | 1.37 |
| G | 3-1/4 | 8.3 | 7.4 | 423.2 | 492.9 | 4.35 | 6.13 | 1.25 |
| H | 3-1/2 | 8.9 | 9.0 | 364.9 | 457.7 | 4.9 | 6.5 | 1.53 |
| I | 3-1/2 | 8.9 | 8.6 | 338.2 | 432.4 | 4.8 | 6.25 | 1.46 |
| J | 2-1/2 | 6.4 | 5.5 | 347.3 | 453.5 | 4.95 | 6.7 | 0.93 |

## Example IV

The procedure of Example III was duplicated with somewhat different concentrations of ingredients to provide a "low slump" concrete. The concrete slurry included a water reducing admixture for concrete, "Prokrete N3", a blend of calcium lignosulfonate and a polysaccharide and sold by Protex Industries, Incorporated. The slurry had the following composition:

| Ingredient | $Lbs/yd^3$ | $Kg/m^3$ |
|---|---|---|
| Cement, Type I Portland | 810 | 480.5 |
| Fine aggregate | 1420 | 842.4 |
| Coarse aggregate | 1436 | 851.9 |
| Water, net | 265 | 157.2 |
| Protex AES | 0.71 | 0.42 |
| Prokrete N3 | 1.52 | 0.90 |

The candidate inhibitors identified in connection with Example III were employed in 1.5 cubic foot (.042 cubic yard) aliquots, and testing was conducted in accordance with the procedures of Example III, yielding the results set out in Table IV.

**Table IV**

| Inhibitor Sample | Slump, in. | Slump, cm. | Air Content, % | Compressive Strength Kg/cm$^2$ 7 days | Compressive Strength Kg/cm$^2$ 28 days | Time of Set, Hours (ASTM C-403) Initial | Time of Set, Hours (ASTM C-403) Final | $V_1/V_o$ |
|---|---|---|---|---|---|---|---|---|
| Control | 3/4 | 1.9 | 6.0 | 387.4 | 466.8 | 4.9 | 6.0 | – |
| A | 3/4 | 1.9 | 4.7 | 384.6 | 463.3 | 5.1 | 6.6 | 0.78 |
| B | 1/2 | 1.3 | 4.6 | 379.0 | 500.6 | 4.77 | 6.82 | 0.77 |
| C | 1 | 2.5 | 4.4 | 366.3 | 509.7 | 4.8 | 6.4 | 0.73 |
| D | 1 | 2.5 | 5.0 | 357.9 | 472.5 | 5.05 | 6.6 | 0.83 |
| E | 1/4 | 0.6 | 4.0 | 387.4 | 508.3 | 4.5 | 6.3 | 0.67 |
| F | 1 | 2.5 | 4.4 | 400.7 | 472.5 | 5.05 | 6.6 | 0.73 |
| G | 1 | 2.5 | 4.0 | 393.7 | 498.5 | 5.3 | 6.65 | 0.67 |
| H | 1 | 2.5 | 4.8 | 361.4 | 471.8 | 5.3 | 6.8 | 0.80 |
| I | 1 | 2.5 | 5.5 | 345.9 | 421.1 | 5.4 | 6.92 | 0.92 |
| J | 1 | 2.5 | 5.0 | 423.2 | 463.3 | 5.05 | 6.75 | 0.83 |

The ratio of $V_1/V_o$, as above defined, is equal to the ratio of the air content percentages appearing in Tables III and IV divided by the air content percentage of the control samples. Thus, the ratio $V_1/V_o$ for the test examples described in Tables III and Table IV range from about 1.5/1 to about .67/1, or, simplifying, from about 3/2 to about 2/3. The preferred hydroxyalkylamine, dimethylethanolamine, does not cause the air content of the concrete slurry to vary more than 20%. It will also be noted that the set times, both initial and final, do not vary from the "control" set time by more than about 25%.

The hydroxyalkylamine compounds referred to herein, being water-soluble, demonstrate mobility within concrete structures when water is applied. As a result, the hydroxyalkylamines can be applied to existing reinforced concrete structures, the amines being carried by water into corrosion-inhibiting proximity to the reinforcing members. The compounds thus can be included in hydraulic cement slurries that are coated over previous concrete structures, the corrosion inhibitors percolating downwardly through the existing concrete to afford corrosion protection to embedded reinforcing members. Rain, melting ice and snow and the like provide the water vehicle for carrying the hydroxyalkylamine compounds throughout concrete structures. Some vapor phase migration of the hydroxyalkylamine compounds is believed to occur as well. The concrete structures thus serve as resevoirs of the corrosion inhibitor to assure a reasonably adequate long-term and continuous supply of inhibitor at the surface of the reinforcing members.

Because skin contact with the corrosion inhibitors used herein should be avoided, the corrosion inhibitors, being soluble in water, preferably are incorporated in a concrete slurry at the time the slurry is made up. Desirably, the hydroxyalkylamine additives are added by means of a metering pump to the "gauge" water that is mixed with the hydraulic cement, sand and other ingredients to form the concrete slurry. This procedure provides a safe and effective control over the amount of corrosion inhibitor that is actually added, and assures that the inhibitor is distributed homogenously through the slurry batch.

While a preferred embodiment of the present invention has been described, it should be understood that various changes, adaptations and modifications may be made therein without departing from the spirit of the invention and the scope of the appended claims.

CLAIMS

1. Method of inhibiting corrosion of iron or steel in concrete which comprises incorporating in a slurry of the concrete an effective quantity of a corrosion inhibiting composition having as its major ingredient a water-soluble hydroxyalkylamine having a molecular weight in the range of about 48 to about 500 and a vapor pressure at 20°C in the range of $10^{-4}$ to $10^{1}$ mm. Hg.

2. The method of Claim 1 wherein the hydroxyalkylamine is a compound of the formula:

$$\begin{array}{c} R_9-N-R_{10} \\ | \\ R_{11} \end{array}$$

wherein $R_9$, $R_{10}$, and $R_{11}$, are, independently, hydrogen, lower alkyl or $-R_{12}$ - OH in which $R_{12}$ is lower alkylene, $C_4$-$C_6$ cycloalkylene, phenylene, or alkphenylene, and at least one of $R_9$, $R_{10}$, and $R_{11}$ is $-R_{12}$ - OH.

3. Method of inhibiting corrosion of iron or steel to be imbedded in concrete which comprises incorporating in a concrete slurry from about 0.002% to about 3% by weight of a corrosion inhibiting composition of which the major ingredient is a hydroxyalkylamine having a molecular weight in the range of about 48 to about 500 and a vapor pressure at 20°C in the range of about $10^{-4}$ to $10^{1}$ mm. Hg., the corrosion inhibiting composition permitting an air entrainment variance $V_1/V_o$ limited to the range of 3/2 to 2/3 wherein $V_1$ is the volume of entrained air per unit volume of such slurry and $V_o$ is the volume of entrained air per unit

volume of an identical slurry but from which the corrosion inhibiting composition has been omitted.

4. The method of Claim 3 wherein the hydroxyalkylamine is a compound of the formula

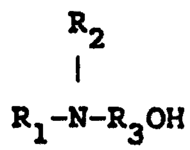 or 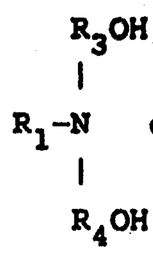 or 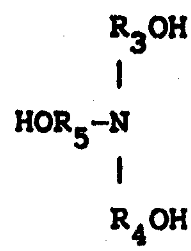

in which $R_1$ and $R_2$ are, independently, hydrogen, lower alkyl, $C_4$-$C_6$ cycloalkyl, lower alkenyl, aryl or alkaryl, wherein $R_3$, $R_4$, and $R_5$ are, independently, lower alkylene, $C_4$-$C_6$ cycloalkylene, lower alkenylene, phenylene, alkphenylene, or $-R_6$-X-$R_7$- wherein $R_6$ and $R_7$ are, independently, lower alkylene, $C_4$-$C_6$ cycloalkylene, lower alkenylene and X is -O- or -S- or -NH-$R_8$ wherein $R_8$ is lower alkylene, $C_4$-$C_6$ cycloalkylene, or lower alkenylene.

5. The method of Claim 3 in which the hydroxyalkylamine is a compound of the formula:

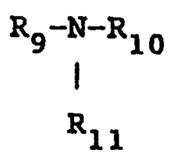

wherein $R_9$, $R_{10}$ and $R_{11}$ may independently be H, alkyl or $-R_{12}$-OH in which $R_{12}$ is lower alkylene, $C_4$-$C_6$ cycloalkylene, phenylene or alkphenylene, and at least one of $R_9$, $R_{10}$ and $R_{11}$ is $-R_{12}$-OH.

6. The method of Claim 5 wherein $R_9$, $R_{10}$, and $R_{11}$ are, independently, hydrogen, $C_1$-$C_3$ alkyl or $C_1$-$C_4$ hydroxyalkyl with at least one of $R_9$, $R_{10}$, and $R_{12}$ being $C_1$-$C_4$ hydroxyalkyl.

7. A pourable cementitious slurry suitable for making concrete structures in which articles of iron or steel may be imbedded, the slurry comprising a hydraulic cement, water, sand and a corrosion inhibiting composition that does not substantially affect the ability of the slurry to entrain or to maintain entrained air and of which the major ingredient is a hydroxyalkylamine having a molecular weight in the range of about 48 to about 500 and a vapor pressure at 20°C in the range of $10^{-4}$ to $10^{1}$ mm. Hg., the hydroxyalkylamine constituent being present in a concentration of from about 0.002% to about 3% by weight of the slurry.

8. The slurry of claim 7 wherein said hydroxyalkylamine is a compound of the formula

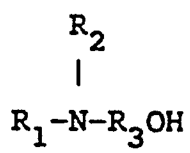

or

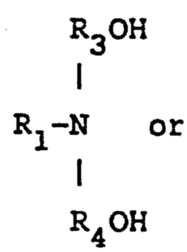

or

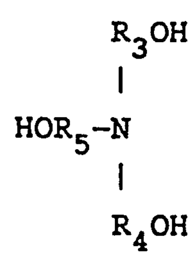

in which $R_1$ and $R_2$ are, independently, hydrogen, lower alkyl, $C_4$-$C_6$ cycloalkyl, lower alkenyl, aryl or alkaryl, wherein $R_3$, $R_4$, and $R_5$ are, independently, lower alkylene, $C_4$-$C_6$ cycloalkylene, lower alkenylene, phenylene, alkphenylene, or $-R_6-X-R_7-$ wherein $R_6$ and $R_7$ are, independently, lower alkylene, $C_4$-$C_6$ cycloalkylene, lower alkenylene and X is -O- or -S- or $-NH-R_8$ wherein $R_8$ is lower alkylene, $C_4$-$C_6$ cycloalkylene, or lower alkenylene.

9. The slurry of claim 7 wherein the hydroxyalkylamine is a compound of the formula

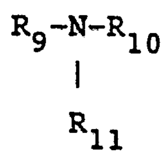

wherein $R_9$, $R_{10}$, and $R_{11}$, are, independently, hydrogen, lower alkyl or $-R_{12} - OH$ in which $R_{12}$ is lower alkylene, $C_4$-$C_6$ cycloalkylene, phenylene, or alkphenylene, and at least one of $R_9$, $R_{10}$, and $R_{11}$ is $-R_{12} - OH$.

10. A cured concrete structure having iron or steel reinforcing members embedded therein, and including, in corrosion-inhibiting proximity to said members, a corrosion inhibiting composition resulting from practice of the method of claim 3.